# EUROPÄISCHE PATENTANMELDUNG

(11) **EP 1 386 781 A2**
(43) Veröffentlichungstag der Anmeldung: **04.02.2004**
(21) Anmeldenummer: 03005095.9
(22) Anmeldetag: 07.03.2003
(51) Int. Cl.: B60Q 1/14

(54) **Vorrichtung zum automatischen Schalten von Beleuchtungseinrichtungen, insbesondere für ein Kraftfahrzeug**

(30) Priorität: 02.08.2002 DE 10235368
(71) Anmelder: ROBERT BOSCH GMBH, 70442 Stuttgart (DE)
(72) Erfinder: Henkel, Frank, 77830 Buehlertal (DE); Schneider, Andreas, 77833 Ottersweier (DE); Blitzke, Henry, 77815 Buehl (DE); Meier, Hans, 77833 Ottersweier (DE); Hodapp, Bruno, 77855 Achern-Oensbach (DE); Schmitt, Patrick, 77839 Lichtenau (DE)

(57) **Zusammenfassung**

Es wird eine Vorrichtung zum automatischen Schalten von Beleuchtungseinrichtungen (36), insbesondere für ein Kraftfahrzeug vorgeschlagen, mit einem zumindest infrarote Strahlung detektierenden Sensorelement (14, 16, 18) und einem Filterelement (22, 26, 28, 30), wobei das Filterelement (22, 26, 28, 30) derart ausgebildet ist, daß im wesentlichen nur infrarote Strahlung vom Sensorelement (14, 16, 18) erfassbar ist.

## Beschreibung

### Stand der Technik

Die Erfindung betrifft eine Vorrichtung zum automatischen Schalten von Beleuchtungseinrichtungen, insbesondere für Kraftfahrzeuge, nach Gattung des unabhängigen Anspruchs.

Es sind schon zahlreiche derartige Vorrichtungen bekannt, beispielsweise aus der DE 199 33 642 A1, bei denen mit Filterelementen versehene Sensorelemente vorgesehen sind, die Strahlung detektieren. Diese Sensorelemente geben Signale ab, in Abhängigkeit derer die Beleuchtungseinrichtungen geschaltet werden. Da diese Vorrichtungen die Beleuchtungseinrichtungen in Abhängigkeit des Tageslichtes schalten sollen, werden bei derartigen Vorrichtungen Filter verwendet, die in wesentlichen nur im Bereich des sichtbaren Lichtes, also im Bereich zwischen 400 und 730 nm Wellenlänge, durchlässig sind.

### Vorteile der Erfindung

Die erfindungsgemäße Vorrichtung mit den Merkmalen des Hauptanspruchs hat den Vorteil, dass dadurch das Filterelement derart ausgebildet ist, dass im Wesentlichen nur infrarote Strahlung vom Sensorelement erfassbar ist. Umfangreiche Versuche haben gezeigt, dass eine derartige Filterung ein verbessertes Ansprechverhalten und damit eine verbesserte Steuerungsfunktion der Beleuchtungseinrichtung zur Folge hat.

Als weiterer Vorteil ist anzusehen, dass der Bereich der Vorrichtung, der zum Strahlungseinfall vorgesehen ist, in dunkler Farbe ausgebildet werden kann. Damit ist eine Anordnung der Vorrichtung im Bereich des Graukeils der Windschutzscheibe eines Kraftfahrzeugs möglich, ohne als optisch störender Fremdkörper empfunden zu werden.

Durch die in den unter Ansprüchen aufgeführten Maßnahmen ergeben sich vorteilhafte Weiterbildungen und Verbesserungen der im Hauptanspruch angegeben Merkmale.

In einer einfachen Ausbildung vermag das Sensorelement ein Signal abzugeben, das einer Steuereinrichtung zuführbar ist, die ein Element zum Schalten der Beleuchtungseinrichtungen in Abhängigkeit des Signals S aufweist.

Besonders vorteilhaft ist es, wenn das Filterelement auf der Scheibe des Kraftfahrzeuges befestigbar ist, da dies im Regelfall die Lichteinfallsrichtung darstellt. Insbesondere können so die Filterelemente mit fokussierenden Eigenschaften kombiniert werden und die Strahlung in Vorwärtsrichtung detektiert werden. Dadurch wird vorteilhafterweise eine vorausschauende Steuereigenschaft erzielt.

Besonders vorteilhaft ist, wenn ein Regensensor mit einem Lichtleitkörper vorgesehen ist, der im Wesentlichen nur für infrarote Strahlung transparent ist und gleichzeitig als Filterelement für die erfindungsgemäße Vorrichtung dient. Auf diese Weise kann auf ein separates Filterelement verzichtet werden und der Lichtleitkörper des Regensensors als Filterelement verwendet werden. Die Lichtleitkörper von Regensensoren sind im häufig nur im infraroten Bereich transparent und für sichtbares Licht undurchlässig.

In besonders einfacher Ausführungsform kann dies dadurch erzielt werden, dass die Oberfläche des Lichtleitkörpers - zumindest teilweise, in der Strahlungseinfallsrichtungmit einer im Wesentlichen nur für infrarote Strahlung transparenten Schicht versehen ist. So wird nur eine dünne Schicht mit den relativ teuren Farbpigmenten zur Ausfilterung der sichtbaren Strahlung benötigt und es ergibt eine besonders kostengünstige Ausführungsform der Erfindung.

Besonders vorteilhaft ist, wenn die Schicht elastisch und/oder klebend ist, da sie auf diese Weise als Koppelmedium zwischen der Scheibe und der Vorrichtung an sich dienen kann.

In einer weiteren vorteilhaften Ausführungsform ist das Filterelement in das Sensorelement integriert. Derartige Sensorelemente sind als fertige Bauteile kostengünstig erhältlich.

### Zeichnungen

Ein Ausführungsbeispiel der Erfindung ist in den Zeichnungen dargestellt und in der nachfolgenden Beschreibung näher erläutert. Es zeigen:
Figur 1 eine erfindungsgemäße Vorrichtung im Querschnitt in schematischer Darstellung und
Figur 2 ein Lichtleitkörper eines Regensensors mit integriertem Filterelement einer erfindungsgemäßen Vorrichtung in perspektivischen Darstellung.

### Beschreibung des Ausführungsbeispiels

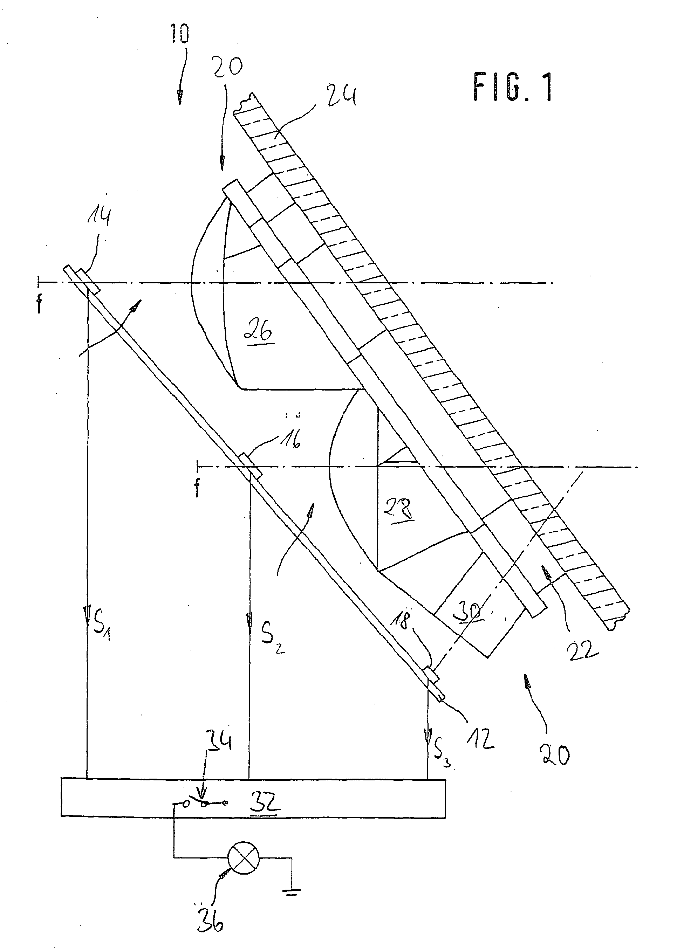

Figur 1 zeigt einen Querschnitt durch eine erfindungsgemäße Vorrichtung in einer schematischen Darstellung.

Die Sensoreinrichtung 10 umfasst eine Schaltungsplatine 12, auf der Sensorelemente 16, 14, 18 angeordnet sind. Die Sensorelemente 14, 16, 18 sind als SMD-Bauelemente ausgebildet und direkt auf der Schaltungsplatine 12 befestigt. Im Erfassungsbereich der Sensorelemente 14, 16, 18 ist weiterhin ein erster Lichtleitkörper 20 angeordnet, der mittels eines elastischen Koppelkissens 22 auf einer Scheibe 24 eines Kraftfahrzeuges befestigt ist. Dazu ist das Koppelkissen 22 aus Silikon ausgebildet und mittels eines Klebstoffes auf der Scheibe 24 befestigt. Typischerweise ist der Lichtleitkörper 20 mit Abstandselementen 21 versehen, die den korrekten Abstand zwischen Lichtleitkörper 20 und Schaltungsplatine 12 mit den Sensorelementen 14, 16, 18 einstellen.

Das Koppelkissen 22 ist weiterhin mit Farbpigmenten versehen, die in der Lage sind, sichtbares Licht zu absorbieren, so dass im Wesentlichen kein sichtbares Licht durch das Koppelkissen 22 dringen kann. Für infrarotes Licht zwischen 400 und 730 nm ist das Koppelkissen jedoch transparent, so daß das Koppelkissen 22 als filternde Schicht dient. Derartige Stoffe sind im Stand der Technik bekannt und hinreichend beschrieben.

Der Lichtleitkörper 20 weist mehrere, insbesondere drei fokussierende Elemente 26, 28, 30 auf, die die infrarote Strahlung aus verschiedenen Richtungen auf die Sensorelemente 14, 16, 18 lenken. Das Element 30 besitzt dabei keine fokussierende Eigenschaft, so dass mit diesem eine Gesamthelligkeit ermittelbar ist.

Die drei Sensorelemente 14, 16, 18 sind mit einer auf der Schaltungsplatine 12 angeordneten Steuereinrichtung 32 verbunden, die die Signale S1, S2, S3 aufnimmt und ein Element 34 zum Schalten von Beleuchtungseinrichtungen 36 aufweist.

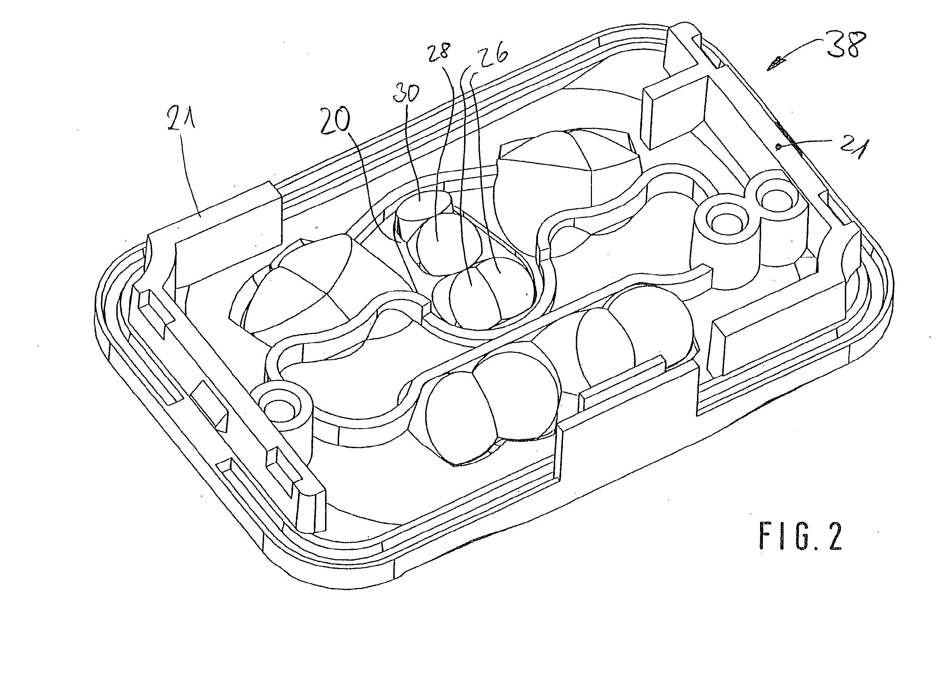

In Figur 2 ist der Lichtleitkörper 20 einer erfindungsgemäßen Vorrichtung, eingebettet in einen weiteren Lichtleitkörper 38 eines nicht dargestellten Regensensors in perspektivischer Darstellung gezeigt. Der Lichtleitkörper 20 sowie der weitere Lichtleitkörper 38 des Regensensors sind einstückig ausgebildet und aus dem identischen Material in einem Spritzgussverfahren hergestellt. Typischerweise ist in diesem Falle der gesamte Lichtleitkörper 20, 38 mit Farbpigmenten derart versetzt, dass er im Wesentlichen nur für infrarote Strahlung durchlässig ist.

Natürlich können die beschriebenen Ausführungsformen beliebig miteinander kombiniert werden. So kann beispielsweise ein filternder Lichtleitkörper 20, 38 mit einem filternden Koppelkissen 22 versehen sein.

In einer Variation der Erfindung teilen sich Steuereinrichtung 32 und Regensensor die Schaltungsplatine 12.

## Patentansprüche

1. Vorrichtung zum automatischen Schalten von Beleuchtungseinrichtungen (36), insbesondere für ein Kraftfahrzeug, mit einem zumindest infrarote Strahlung detektierenden Sensorelement (14, 16, 18) und einem Filterelement (22, 26, 28, 30), **dadurch gekennzeichnet, daß** das Filterelement (22, 26, 28, 30) derart ausgebildet ist, daß im wesentlichen nur infrarote Strahlung vom Sensorelement (14, 16, 18) erfassbar ist.

2. Vorrichtung nach Anspruch 1, **dadurch gekennzeichnet, daß** das Sensorelement (14, 16, 18) ein Signal (S) abzugeben vermag und eine Steuereinrichtung (32) vorgesehen ist, die ein Element (34) zum Schalten der Beleuchtungseinrichtungen (36) in Abhängigkeit des Signals (S) aufweist.

3. Vorrichtung nach einem der vorhergehenden Ansprüche, **dadurch gekennzeichnet, daß** das Filterelement (22, 26, 28, 30) auf der Scheibe (24) des Kraftfahrzeugs befestigbar ist.

4. Vorrichtung nach einem der vorhergehenden Ansprüche, **dadurch gekennzeichnet, daß** ein Regensensor vorgesehen ist, der einen Lichtleitkörper (38) aufweist, der im wesentlichen nur für infrarote Strahlung transparent ist und als Filterelement (22, 26, 28, 30) dient.

5. Vorrichtung nach Anspruch 4, **dadurch gekennzeichnet, daß** auf der Oberfläche des Lichtleitkörpers (20) zumindest teilweise eine im wesentlichen nur für infrarote Strahlung transparente Schicht (22) angeordnet ist.

6. Vorrichtung nach Anspruch 5, **dadurch gekennzeichnet, daß** die Schicht (22) elastisch, insbesondere klebend ist.

7. Vorrichtung nach einem der vorhergehenden Ansprüche, **dadurch gekennzeichnet, daß** das Filterelement (22, 26, 28, 30) in das Sensorelement (14, 16, 18) integriert ist.
